Europäisches Patentamt

European Patent Office

Office européen des brevets

(19)

(11) Numéro de publication : **0 020 576**
**B1**

(12) **FASCICULE DE BREVET EUROPÉEN**

(45) Date de publication du fascicule du brevet :
**03.11.82**

(21) Numéro de dépôt : **79901523.5**

(22) Date de dépôt : **07.11.79**

(86) Numéro de dépôt international :
**PCT/FR 79/00101**

(87) Numéro de publication internationale :
**WO WO/80009 (15.05.80 Gazettee 80/11)**

(51) Int. Cl.³ : **C 25 C   3/08**, C 04 B 35/66

(54) **PROCEDE DE GARNISSAGE DE CUVES D'ELECTROLYSE POUR LA PRODUCTION D'ALUMINIUM.**

(30) Priorité : **07.11.78 FR 7832055**

(43) Date de publication de la demande :
**07.01.81 (Bulletin 81/01)**

(45) Mention de la délivrance du brevet :
**03.11.82 Bulletin 82/44**

(84) Etats contractants désignés :
**AT DE GB NL SE**

(56) Documents cités :
**FR A 2 312 468**
**FR A 2 353 354**
**GB A 1 485 526**

(73) Titulaire : **ALUMINIUM PECHINEY**
**28, rue de Bonnel**
**F-69433 Lyon Cedex 3 (FR)**

(72) Inventeur : **SULMONT, Benoît**
**4, rue Omerou-Asmprax-Spitia**
**Paralia Distomon (Béotie) (GR)**
Inventeur : **HUDAULT, Gérard**
**Echaillon**
**F-73300 Saint-Jean-de-Maurienne (FR)**

(74) Mandataire : **Pascaud, Claude**
**PECHINEY UGINE KUHLMANN 28, rue de Bonnel**
**F-69433 Lyon Cedex 3 (FR)**

Imprimerie Jouve, 18, rue St-Denis, 75001 Paris, France

Procédé de garnissage de cuves d'électrolyse pour la production d'aluminium

La présente invention concerne un procédé pour confectionner le garnissage de cuves pour la production d'aluminium par électrolyse d'alumine dissoute dans de la cryolithe fondue.

Une cuve pour la production d'aluminium est constituée par un caisson métallique, dont la longueur atteint couramment aujourd'hui de 5 à 8 mètres et la largeur de 2 à 4 mètres. Le fond du caisson est, tout d'abord, garni sur une épaisseur de l'ordre de 18 à 42 centimètres, de matériaux réfractaires électriquement et thermiquement isolants, et résistant aux infiltrations éventuelles d'aluminium et de produits fluorés. Puis, on dispose les « blocs cathodiques » dont l'ensemble va constituer la cathode de la cuve d'électrolyse, et qui se trouveront directement au contact de la nappe d'aluminium liquide produit par la cuve. Il reste alors à réaliser les joints entre les blocs cathodiques puis le garnissage latéral de la cuve, c'est-à-dire le remplissage de l'espace situé entre les parois latérales du caisson et les blocs cathodiques au moyen d'une matière résistant à l'action chimique de l'aluminium et du bain fluoré à une température proche de 1 000 °C.

Ce garnissage doit posséder un certain nombre d'autres qualités, notamment, une bonne résistance mécanique, car il doit subir de fortes contraintes, stabilité dimensionnelle à la cuisson, possibilité de recevoir une armature, comme un béton classique, bonne tenue à l'oxydation et à l'érosion par le bain d'électrolyse et le métal.

Cette opération de garnissage est aussi appelée « brasquage » car elle est le plus souvent réalisée à partir de « pâte de brasque », c'est-à-dire d'un mélange à base de brai et de coke, qui est mis en place à chaud et damé.

Le soin apporté à la réalisation de ce « brasquage » et la qualité des produits utilisés déterminent dans une très large mesure la durée de vie d'une cuve d'électrolyse, des infiltrations de métal et de cryolithe fondus au travers de joints imparfaits ou fissurés, pouvant provoquer à bref délai sa mise hors service.

Le procédé objet de l'invention, est basé sur l'utilisation, pour le brasquage, d'un produit constitué d'un liant non carboné et d'un agrégat dont au moins une fraction est constituée par un produit carboné.

Jusqu'alors, on avait tenu pour certain que seuls des produits carbonés pouvaient être utilisés au contact de l'électrolyte et de l'aluminium liquide, à l'exception, cependant, de produits spéciaux tels que le nitrure de bore dont le prix, très élevé, s'oppose à une application industrielle.

Or, de façon tout à fait surprenante, on a découvert qu'il était possible d'utiliser des produits de brasquage non entièrement carbonés, et, en particulier, des bétons constitués à partir d'un ciment à prise hydraulique ou chimique et d'une charge (généralement appelée agrégat) dont tout ou partie est constituée d'une matière carbonée, telle que l'anthracite, des déchets d'anodes ou de cathodes, ou des matériaux de récupération, provenant, par exemple, du démontage de cuves hors usage. On a constaté que la proportion de matière carbonée dans l'agrégat devait être au moins égale à 5 % en poids pour obtenir les propriétés désirées.

Compte tenu de la température à laquelle sera porté le béton, et de la nécessité que sa porosité soit aussi faible que possible, il est préférable d'utiliser, pour sa confection, un ciment à faible rétention d'eau, c'est-à-dire en pratique, un ciment à faible teneur en CaO, cet élément étant responsable, en grande partie, de l'abaissement de la réfractarité et de la rétention d'eau.

En particulier, le ciment à prise chimique, objet du brevet français 2.359.090, au nom de la Société Européenne des Produits Réfractaires, convient particulièrement bien. Il est caractérisé par un mélange de 25 à 30 % en poids d'un ciment alumineux choisi parmi les ciments à base de mono-aluminate et de di-aluminate de calcium, de 35 à 40 % en poids de silice vitreuse en particules de 0,01 à 0,1 micromètre, et de 35 à 45 % d'une charge inerte en particules de 1 à 100 micromètres ; en outre, ce ciment contient moins de 15 % en poids et, de préférence, moins de 10 % en poids de CaO.

L'agrégat, comme il est dit plus haut, peut être constitué en partie, ou en totalité, par une matière carbonée. La partie non carbonée peut être choisie parmi les produits réfractaires ayant, de préférence, une conductivité thermique adaptée au type de cuve, une conductivité électrique relativement faible, et une résistance convenable à l'aluminium liquide et à l'électrolyte fondu, tels que le corindon noir ou les produits silico-alumineux.

La mise en œuvre d'un tel béton peut se faire par les méthodes classiques de vribo-damage ou de coulée en coffrage, mais il est souvent préférable de confectionner tout d'abord des blocs ayant des formes et des dimensions adaptées au garnissage à réaliser, de les étuver pour provoquer à la fois la prise et le départ de la majeure partie de l'eau, puis de les mettre en place dans la cuve et de les jointoyer de façon habituelle.

Les exemples qui suivent décrivent un mode de mise en œuvre de l'invention :

## Exemple 1

On a préparé un béton composé de 15 % de ciment à prise, à faible teneur en chaux, selon le brevet français 2 359 090 précédemment cité, et de 85 % d'anthracite calciné en grains ayant la répartition granulométrique suivante :

# 0 020 576

| | |
|---|---|
| 2 à 4 mm | : 41 % |
| tout venant 2 mm | : 16 % |
| 0,5 — 1 mm | : 13 % |
| 0,5 mm | : 30 % |

On a ajouté 60 litres d'eau par tonne de composition sèche. On a confectionné, à partir de ce béton, des blocs pour le garnissage des parois et du talus d'une cuve d'électrolyse pour la production d'aluminium, ces blocs ayant une forme prismatique à section trapézoïdale d'un poids unitaire de l'ordre de 200 kg, et étant munis de 2 crochets de manutention que l'on coupe au chalumeau par la suite. Après étuvage à 450 °C, on a mesuré les caractéristiques suivantes :

| | |
|---|---|
| masse volumique | : 1,77 — 1,79 kg/dm$^3$ |
| résistance à l'écrasement | : 5 000 à 6 000 daN/cm$^2$ |
| porosité | : 3,5 à 7 % |
| coefficient de dilatation thermique entre 20 et 1 000 °C | : 4,3 10$^{-6}$ |

composition chimique en poids :

| | |
|---|---|
| $Al_2O_3$ | : 17,6 % |
| $SiO_2$ | : 9,4 % |
| CaO | : 2,7 % |
| $Na_2O$ | : 1,1 % |
| $Fe_2O_3$ | : 0,7 % |
| C | : 63,6 % |
| eau | : inférieure ou égale à 5 % |

Après cuisson, à 950 °C, on a mesuré :

| | |
|---|---|
| masse volumique | : 1,68 kg/dm$^3$ |
| résistance à l'écrasement | : 3 500 daN/cm$^2$ |
| conductibilité électrique | : non mesurable (pratiquement nulle) |
| conductibilité thermique à 400° (kcal/m.h. °C) | : $\lambda = 2,5$ à 3 (comparés à $\lambda = 3,1$ pour la pâte à brasque classique) |

Les blocs ont été mis en place dans la cuve, puis jointoyés avec la pâte de brasque classique, à base de coke et de brai. Par rapport à un brasquage classique, réalisé par damage de pâte à brasque chaude, le gain de temps a été d'environ 30 %. Après plusieurs mois de fonctionnement, la cuve d'électrolyse ainsi réalisée n'a donné aucun signe de défaillance.

**Revendications**

1. Procédé de garnissage de cuves pour la production d'aluminium par électrolyse d'alumine dissoute dans de la cryolithe fondue, caractérisé par les étapes suivantes :
— on prend comme liant un ciment à prise à faible rétention d'eau et à faible porosité ouverte, après prise, comportant de 25 à 30 % en poids d'un ciment alumineux choisi parmi les ciments à base de mono-aluminate et de di-aluminate de calcium, de 35 à 40 % en poids de silice vitreuse en particules de 0,01 à 0,1 micromètre, et de 35 à 45 % d'une charge inerte en particules de 1 à 100 micromètres, ce ciment contenant moins de 15 % en poids et, de préférence, moins de 10 % en poids de CaO,
— on lui ajoute un agrégat dont au moins une fraction est constituée par un produit carboné et l'autre fraction étant constituée par un produit non carboné,
— on ajoute une quantité d'eau ne dépassant pas 10 % en poids et, de préférence, 6 % en poids de la composition sèche,
— on réalise le garnissage de la cuve avec le béton ainsi obtenu.

2. Procédé de garnissage de cuves d'électrolyse selon la revendication 1, caractérisé en ce que l'on réalise le garnissage du four en place.

3. Procédé de garnissage de cuves d'électrolyse selon la revendication 1, caractérisé en ce que le béton obtenu est tout d'abord mis en œuvre dans des moules fournissant des blocs, qui, après démoulage, permettent de réaliser le garnissage de la cuve par juxtaposition et/ou superposition.

4. Procédé de garnissage de cuves d'électrolyse selon la revendication 3, caractérisé en ce que les blocs, après démoulage, sont étuvés à une température au moins égale à 120 °C et, de préférence, supérieure à 400 °C.

5. Procédé de garnissage de cuves d'électrolyse selon la revendication 1, caractérisé en ce que l'agrégat comprend au moins 5 % en poids de produit carboné.

6. Procédé de garnissage de cuves d'électrolyse selon la revendication 5, caractérisé en ce que la

3

fraction carbonée de l'agrégat est de l'anthracite.

7. Procédé de garnissage de cuves d'électrolyse selon la revendication 5, caractérisé en ce que l'agrégat provient, au moins en partie, de résidus de démolition de cuves d'électrolyse.

**Claims**

1. A process for lining tanks for the production of aluminium by electrolysis of alumina which is dissolved in molten cryolite, characterised by the following steps :

— as binder, a setting cement is used which has a low water retention and a low open porosity and which, after setting, comprises from 25 to 30 % by weight of an aluminous cement selected from cements based on calcium mono-aluminate and di-aluminate, from 35 to 40 % by weight of vitreous silica in particles of from 0.01 to 0.1 micrometres, and from 35 to 45 % of an inert charge of particles of from 1 to 100 micrometres, this cement containing less than 15 % by weight and, preferably, less than 10 % by weight of CaO,

— an aggregate is added to the binder, at least one fraction of the aggregate being composed of a carbonaceous product and the other fraction being composed of a non-carbonaceous product,

— a quantity of water is added which does not exceed 10 % by weight and, preferably, does not exceed 6 % by weight of the dry composition,

— the tank is lined using the concrete thus obtained.

2. A process for lining electrolysis tanks according to claim 1, characterised in that the furnace is lined in position.

3. A process for lining electrolysis tanks according to claim 1, characterised in that the concrete which is obtained is first of all used in moulds producing blocks which, after removing from the mould, allow the tank to be lined by juxtaposition and/or superposition.

4. A process for lining electrolysis tanks according to claim 3, characterised in that, after removal from the mould, the blocks are dried at a temperature which is at least equal to 120 °C and is preferably above 400 °C.

5. A process for lining electrolysis tanks according to claim 1, characterised in that the aggregate comprises at least 5 % by weight of carbonaceous product.

6. A process for lining electrolysis tanks according to claim 5, characterised in that the carbonaceous fraction of the aggregate is anthracite.

7. A process for lining electrolysis tanks according to claim 5, characterised in that the aggregate at least partly originates from demolition residues of electrolysis tanks.

**Ansprüche**

1. Verfahren zum Auskleiden von Zellen für die Herstellung von Aluminium durch Elektrolyse von in geschmolzenem Kryolith gelöstem Aluminium, gekennzeichnet.

— durch als Bindemittel erfolgende Verwendung eines Zements geringer Wasserretention beim Abbinden und geringener offener Porosität nach dem Abbinden mit 25-30 Gewichtsprozent eines Aluminatzements, ausgewählt unter den Zementen auf der Basis von Monoaluminat und Kalzium-Dialuminat, mit 35-40 Gewichtsprozent Quarzglas mit einer Teilchengröße von 0,01-0,1 $\mu$m und mit 35-40 Gewichtsprozent eines in neutralen Füllstoffs mit einer Teilchengröße von 1-100 $\mu$m, wobei dieser Zement wenigstens 15 Gewichtsprozent, vorzugsweise weniger als 10 Gewichtsprozent, CaO enthält,

— durch Hinzufügen eines Gemenges, von dem wenigstens ein Teil aus einem kohlenstoffhaltigen Produkt und der andere Teil aus einem kohlenstofffreien Produkt besteht,

— durch Hinzufügen einer Wassermenge, die 10 Gewichtsprozent, vorzugsweise 6 Gewichtsprozent, der trockenen Zusammensetzung nicht übersteigt, und

— durch Auskleiden der Zellen mit dem auf diese Weise hergestellten Beton.

2. Verfahren zum Auskleiden von Elektrolysezellen nach Anspruch 1, gekennzeichnet durch Auskleiden des Ofens an Ort und Stelle.

3. Verfahren zum Auskleiden von Elektrolysezellen nach Anspruch 1, dadurch gekennzeichnet, daß der hergestellte Beton vor allem in Formen verarbeitet wird, die Blöcke liefern, die nach dem Ausformen ein Auskleiden der Zelle durch Über- und Nebeneinanderlegen gestatten.

4. Verfahren zum Auskleiden von Elektrolysezellen nach Anspruch 3, dadurch gekennzeichnet, daß die Blöcke nach dem Ausformen bei einer Temperatur von wenigstens 120 °C, vorzugsweise über 400 °C, getrocknet werden.

5. Verfahren zum Auskleiden von Elektrolysezellen nach Anspruch 1, dadurch gekennzeichnet, daß das Gemenge wenigstens 5 Gewichtsprozent an kohlenstoffhaltigem Produkt enthält.

6. Verfahren zum Auskleiden von Elektrolysezellen nach Anspruch 5, dadurch gekennzeichnet, daß der kohlenstoffhaltige Anteil des Gemenges Anthrazit ist.

7. Verfahren zum Auskleiden von Elektrolysezellen nach Anspruch 5, dadurch gekennzeichnet, daß das Gemenge wenigstens teilweise aus Zerstörungsrückständen von Elektrolysezellen besteht.